# EUROPEAN PATENT SPECIFICATION

(11) **EP 1 352 779 B1**
(45) Date of publication and mention of the grant of the patent: **12.11.2008**
(21) Application number: 03007931.3
(22) Date of filing: 08.04.2003
(51) Int. Cl.: B60N 2/04, B60N 2/20, B60N 2/58

(54) **Trim fabric grip handle**
In einem Textilüberzug integrierter Handgriff
Poignée intégrée dans une housse textile

(30) Priority: 08.04.2002 US 118303
(43) Date of publication of application: 15.10.2003
(73) Proprietor: Capro, Inc., Willis, TX 77378 (US)
(72) Inventor: Alejandro, Frank, Spring, Texas 77373 (US)
(74) Representative: UEXKÜLL & STOLBERG

(56) References cited:
- US-A- 2 564 924
- US-B1- 6 231 101
- PATENT ABSTRACTS OF JAPAN vol. 1999, no. 09, 30 July 1999 (1999-07-30) -& JP 11 105606 A (TACHI S CO LTD), 20 April 1999 (1999-04-20)
- PATENT ABSTRACTS OF JAPAN vol. 014, no. 485 (C-0772), 23 October 1990 (1990-10-23) -& JP 02 200216 A (IKEDA BUSSAN CO LTD), 8 August 1990 (1990-08-08)

## Description

### FIELD OF INVENTION

This invention pertains to handle assemblies which control the position of a vehicle seat; more particularly, the present invention pertains to handle assemblies which are able to capture the trim fabric covering the vehicle seat.

### BACKGROUND

In the construction of vehicle seats for use in automobiles, trucks, recreational vehicles, aircraft, boats, etc., a frame is typically used to both give shape to the seat and provide a mounting for the adjustment hardware needed to change the position of the seat for the operator's comfort. As the vehicle seat is assembled, other seat components such as foam and liner fabric are placed over the frame. To give an attractive appearance to the vehicle seat, a final layer of trim fabric is then used.

In prior art seat assembly systems, it is necessary to build a support surface into the seat frame to capture the seat trim fabric. Typically, the seat components, such as the foam and liner fabric, are installed after components such as the foam and liner fabric are installed on the seat frame. Assembling the hardware components which adjust the position of the seat after the installation of the foam and liner fabric complicates the operation of installing the seat position adjustment hardware. Such complication adds to increased assembly costs to make the seat ready for use in a vehicle.

Therefore, there is a need in the art to simplify the assembly and construction of a vehicle seat so as to both reduce its costs while at the same time increasing the overall quality of the vehicle seat.

US 6,231,101 relates to a seat storage structure for a passenger car in which the rear seat rearrangement operation can be performed more easily, wherein a first bracket is fixed to a skeleton frame provided in the seat back, a second bracket attached to a base of a pull fitting is attached to the first bracket, a skin of the back seat is held between a receiving member and a garnish in a manner so that the receiving member and the garnish are put on the skin from a back and from a front of the skin to cover an opening formed in the skin. A base of the pull fitting is disposed to face the garnish and the receiving member, and the receiving member is made to abut against the second bracket.

### SUMMARY

The present invention simplifies the assembly and construction of a vehicle seat. The trim fabric grip handle system of the present invention is a control handle assembly designed for use in a vehicle seat which is covered with a trim fabric. A movable handle within the control handle assembly is connected electrically or by a cable or lever system to a mechanism which changes the position of the vehicle seat with respect to the vehicle. Surrounding the movable handle is a flange. The flange includes a plurality of outwardly facing spikes which engage the trim fabric. A second flange having substantially the same shape as the first flange fits over the first flange. A plurality of spikes on the inner surface of the second flange cooperate with the spikes on the first flange to engage the trim fabric and thereby locate the control handle assembly with respect to the trim fabric.

Use of the trim fabric grip control handle system of the present invention allows assembly of a vehicle seat without the need for a support surface for first positioning and then mounting the vehicle seat control handle assembly during the build-up of the vehicle seat.

### BRIEF DESCRIPTION OF THE DRAWINGS

A better understanding of the trim fabric grip control handle system and method of the present invention may be had by reference to the drawing figures, wherein:
Figure 1 is a rear perspective view of the trim fabric grip control handle system of the present invention; and
Figure 2 is a front perspective view of the trim fabric grip control system.

### DESCRIPTION OF THE EMBODIMENTS

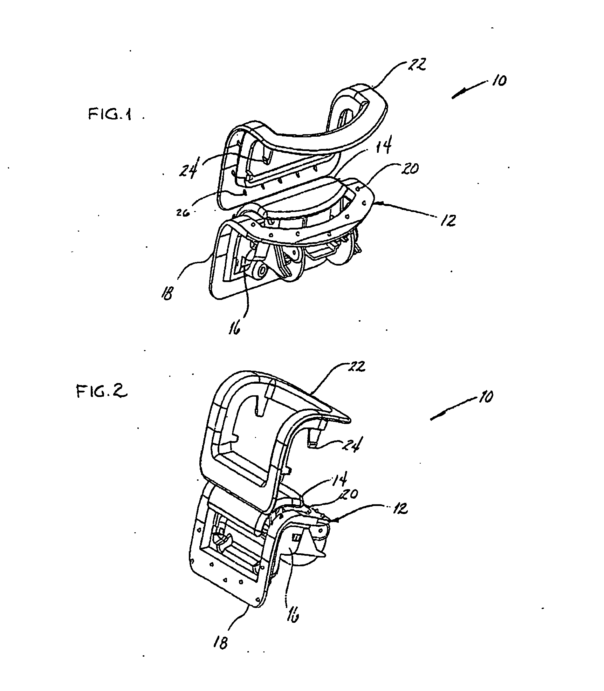

As may be seen in Figures 1 and 2, the trim fabric grip handle system **10** includes two basic components. The first component is a control handle assembly **12** which includes a movable handle **14** mounted within a housing **16**. This arrangement allows the movable handle **14** to be repositioned in response to mechanical force placed thereon by a person. When the movable handle **14** moves within the housing **16**, the seat position adjustment hardware allows the vehicle seat to move. As is well known to those of ordinary skill in the art, the movable handle **14** may move a cable, reposition a lever, activate a crank, or change the condition of an electrical switch (not shown). This movement of a cable, repositioning of a lever, activating a crank, or changing the condition of an electrical switch causes the vehicle seat movement mechanism, which may be located underneath the seat, to change the position of the vehicle seat with respect to the vehicle. The housing **16** containing the movable handle **14** is surrounded by a flange or a frame **18**. This flange or frame **18** includes a plurality of outwardly extending spikes **20**. Such outwardly extending spikes **20** may be seen by specific reference to both Figures 1 and 2.

The second key portion of the present invention is the second flange or face plate **22** which is constructed and arranged to fit over the first flange **18**. A plurality of latch mechanisms **24** may be used to attach the face plate **24** to the housing **16** containing the moveable handle **14**. On the inside of the face plate are found a plurality of spikes **26**. When the face plate **22** and the control handle assembly **12** are mechanically connected one to another, there is sufficient space between flange **18** and face plate **22** to capture the trim fabric which covers the seat. The spikes **20**, **26** act to physically engage the trim fabric and hold the trim fabric in position. While spikes **20**, **26** are used in the preferred embodiment, it will be understood by those of ordinary skill in the art that the spikes **20, 26** may be replaced by adhesive or by the use of a plurality of protrusions and corresponding receptacles into which the protrusions may fit.

To match the decor of the vehicle, the face plate or second flange **22** is typically made to have a decorative exterior. Such decorative exterior may include a chromed or polished surface.

### OPERATION

When constructing a vehicle seat, the operation begins with the creation of a frame which defines the general shape of the vehicle seat. In prior art seat build-up operations, it has been necessary to cover the frame with a liner fabric and foam before the mechanical components such as the control or position control handle and associated mechanisms were attached to the seat. Such method of manufacture greatly increased the complexity of constructing a vehicle seat as the foam and liner fabric prevented easy access to the hardware components of the vehicle seat. These prior art vehicle seat construction systems were all based on the need for a support surface for installing all components. According to the present invention, it is possible to capture the seat trim fabric between the face plate and the flange surrounding the moveable control handle. With the control handle housing captured in the trim fabric, the control handle assembly may be installed on the vehicle seat at the same time as the trim fabric is installed. Such assembly technique simplifies vehicle seat construction, reduces the overall cost of the seat, and improves the overall quality of the vehicle seat. Accordingly, a higher quality seat results in a safer seat for the operator of the vehicle.

Those of ordinary skill in the art will understand that the foregoing invention has been described in terms of its preferred embodiment. Accordingly, numerous other embodiments of the present invention will become apparent following an understanding of the foregoing disclosure. Such other embodiments shall be included in the scope and meaning of the appended claims.

## Claims

1. A control handle assembly (12) for use in a vehicle seat covered with trim fabric, said control handle assembly comprising:
- means (14) for changing the mechanical condition of a system for controlling the position of the vehicle seat; and
- a flange (18) for surrounding said means for changing the mechanical condition;
**characterized by**
- said flange (18) including a plurality of outwardly facing spikes (20) constructed and arranged to engage the trim fabric;
- a face plate (22) constructed and arranged to both fit over said flange (18) and engage said means for changing the mechanical condition; and
- said face plate (22) including a plurality of inward facing spikes (26) constructed and arrange to engage the trim fabric.

2. The control handle assembly (12) as defined in claim 1, wherein said means (14) for changing the mechanical condition engages a cable.

3. A vehicle seat comprising:
- a seat frame;
- padding covering said seat frame;
- means (14) for controlling the position of the vehicle seat;
- a control handle assembly (12) including:
- a first flange (18) constructed and arranged for mounting a seat position control handle assembly, said seat position control handle assembly constructed and arranged to activate said means (14) for controlling the position of the vehicle seat;
**characterized by**
- said first flange (18) including a plurality of outwardly facing spikes (20) constructed and arranged to engage the trim fabric;
- a second flange (22) constructed and arranged to fit over said first flange (18) and engage said means (14) for controlling the position of the vehicle seat; and
- said second flange (22) including a plurality of inward facing spikes (26) constructed and arrange to engage the trim fabric.

4. The vehicle seat as defined in claim 3, wherein said second flange (22) is a decorative face plate.

5. The vehicle seat as defined in claim 3, wherein said control handle assembly (12) and said means (14) for controlling the position of the vehicle seat are interconnected by a cable.

6. The vehicle seat as defined in claim 3, wherein said control handle assembly (12) and said means (14) for controlling the position of the vehicle seat are electrically interconnected.

7. The vehicle seat as defined in claim 3, wherein said second flange (22) is positioned over said first flange (18) by engagement with said control handle assembly (12).

8. A method for constructing a vehicle seat including a seat frame, padding and trim fabric, wherein the position of the vehicle seat is governed by a position control handle (14), said method comprising the steps of:
- locating the position control handle (14) with respect to the seat frame;
- installing the padding on the seat frame;
- installing the trim fabric over the padding; and
- capturing the trim fabric between a first flange (18) and a second flange (22), wherein said first flange (18) is constructed and arranged to surround the position control handle (14) and said second flange (22) is constructed and arranged for mounting over said first flange (18).
**characterized by**
- said first flange (18) including a plurality of outwardly facing spikes (20) constructed and arranged to engage the trim fabric; and
- said second flange (22) including a plurality of inward facing spikes (26) constructed and arrange to engage the trim fabric.

9. The method as defined in claim 8, further including the step of connecting said position control handle (14) to a seat movement mechanism.

10. The method as defined in claim 8, wherein said second flange (22) is a decorative face plate.

## Patentansprüche

1. Steuerhandgriffbaugruppe (12) zur Verwendung in einem Fahrzeugsitz, der mit einem Textilüberzug überdeckt ist, wobei die Steuerhandgriffbaugruppe aufweist:
- eine Einrichtung (14), um den mechanischen Zustand eines Systems zum Steuern der Position des Fahrzeugsitzes zu verändern; und
- einen Flansch (18), um die Einrichtung zum Verändern des mechanischen Zustands zu umgeben;
**dadurch gekennzeichnet, dass**
- der Flansch (18) eine Vielzahl von nach außen gerichteten Spitzen (20) aufweist, die ausgestaltet und angeordnet sind, um mit dem Textilüberzug einzugreifen;
- eine Abdeckplatte (22) ausgestaltet und angeordnet ist, um sowohl über den Flansch (18) zu passen als auch mit der Einrichtung zum Verändern des mechanischen Zustands einzugreifen; und
- die Abdeckplatte (22) eine Vielzahl von nach innen gerichteten Spitzen (26) aufweist, die ausgestaltet und angeordnet sind, um mit dem Textilüberzug einzugreifen.

2. Steuerhandgriffbaugruppe (12) nach Anspruch 1, bei der die Einrichtung (14) zum Verändern des mechanischen Zustands mit einem Kabel in Eingriff steht.

3. Fahrzeugsitz mit:
- einem Sitzrahmen;
- einer Polsterung, die den Sitzrahmen überdeckt;
- einer Einrichtung (14) zum Steuern der Position des Fahrzeugsitzes;
- einer Steuerhandgriffbaugruppe (12) mit:
- einem ersten Flansch (18), der ausgestaltet und angeordnet ist, um die Sitzpositions-Steuerhandgriffbaugruppe zu montieren, wobei die Sitzpositionssteuerhandgriffbaugruppe ausgestaltet und angeordnet ist, um die Einrichtung (14) zum Steuern der Position des Fahrzeugsitzes zu aktivieren;
**dadurch gekennzeichnet, dass**
- der erste Flansch (18) eine Vielzahl von nach außen gerichteten Spitzen (20) aufweist, die ausgestaltet und angeordnet sind, um mit dem Textilüberzug einzugreifen;
- ein zweiter Flansch (22) ausgestaltet und angeordnet ist, um über den ersten Flansch (18) zu passen und mit der Einrichtung (14) zum Steuern der Position des Fahrzeugsitzes einzugreifen; und
- der zweite Flansch (22) eine Vielzahl nach innen gerichteten Spitzen (26) aufweist, die ausgestaltet und angeordnet sind, um mit dem Textilüberzug einzugreifen.

4. Fahrzeugsitz nach Anspruch 3, bei dem der zweite Flansch (22) eine dekorative Abdeckplatte ist.

5. Fahrzeugsitz nach Anspruch 3, bei dem die Steuerhandgriffbaugruppe (12) und die Einrichtung (14) zum Steuern der Position des Fahrzeugsitzes durch ein Kabel miteinander verbunden sind.

6. Fahrzeugsitz nach Anspruch 3, bei dem die Steuerhandgriffbaugruppe (12) und die Einrichtung (14) zum Steuern der Position des Fahrzeugsitzes elektrisch miteinander verbunden sind.

7. Fahrzeugsitz nach Anspruch 3, bei dem der zweite Flansch (22) durch Eingriff mit der Steuerhandgriffbaugruppe (12) über dem ersten Flansch (18) positioniert ist.

8. Verfahren zum Herstellen eines Fahrzeugsitzes mit einem Sitzrahmen, einer Polsterung und einem Textilüberzug, wobei die Position des Fahrzeugsitzes durch einen Positionssteuerhandgriff (14) bestimmt wird, wobei das Verfahren die Schritte umfasst:
- Anordnen des Positionssteuerhandgriffs (14) bezüglich des Sitzrahmens;
- Installieren der Polsterung auf dem Sitzrahmen;
- Installieren des Textilüberzugs über der Polsterung; und
- Festklemmen des Textilüberzugs zwischen einem ersten Flansch (18) und einem zweiten Flansch (22), wobei der erste Flansch (18) ausgestaltet und angeordnet ist, um den Positionssteuerhandgriff (14) zu umgeben, und der zweite Flansch (22) ausgestaltet und angeordnet ist, um über dem ersten Flansch (18) montiert zu werden;
**dadurch gekennzeichnet, dass**
- der erste Flansch (18) eine Vielzahl von nach außen gerichteten Spitzen (22) aufweist, die ausgestaltet und angeordnet sind, um mit dem Textilüberzug einzugreifen; und
- der zweite Flansch (22) eine Vielzahl von nach innen gerichteten Spitzen (26) aufweist, die ausgestaltet und angeordnet sind, um mit dem Textilüberzug einzugreifen.

9. Verfahren nach Anspruch 8, außerdem mit dem Schritt des Verbindens des Positionssteuerhandgriffs (14) mit einem Sitzbewegungsmechanismus.

10. Verfahren nach Anspruch 8, bei dem der zweite Flansch (22) eine dekorative Abdeckplatte ist.

## Revendications

1. Ensemble à poignée de commande (12) destiné à être utilisé dans un siège de véhicule recouvert d'une housse textile, ledit ensemble à poignée de commande comportant :
- un moyen (14) destiné à changer la condition mécanique d'un système pour commander la position du siège du véhicule ; et
- une bride (18) destinée à entourer ledit moyen pour changer la condition mécanique ;
**caractérisé en ce que**
- ladite bride (18) comprend de multiples ergots (20) tournés vers l'extérieur, réalisés et agencés pour engager la housse textile ;
- une plaque frontale (22) réalisée et agencée pour à la fois s'ajuster sur ladite bride (18) et engager ledit moyen pour changer la condition mécanique ; et
- ladite plaque frontale (22) comprend de multiples ergots (26) tournés vers l'intérieur, réalisés et agencés pour engager la housse textile.

2. Ensemble à poignée de commande (12) selon la revendication 1, dans lequel ledit moyen (14) destiné à changer la condition mécanique est en prise avec un câble.

3. Siège de véhicule comportant :
- un châssis de siège ;
- une garniture recouvrant ledit châssis de siège ;
- un moyen (14) pour commander la position du siège du véhicule ;
- un ensemble à poignée de commande (12) comprenant :
- une première bride (18) réalisée et agencée pour un montage d'un ensemble à poignée de commande de position de siège, ledit ensemble à poignée de commande de position de siège étant réalisé et agencé pour activer ledit moyen (14) pour la commande de la position du siège de véhicule ;
**caractérisé en ce que**
- ladite première bride (18) comprend de multiples ergots (20) tournés vers l'extérieur, réalisés et agencés pour engager la housse textile ;
- une seconde bride (22) réalisée et agencée pour s'ajuster sur ladite première bride (18) et pour engager ledit moyen (14) pour commander la position du siège de véhicule ; et
- ladite seconde bride (22) comprend de multiples ergots (26) tournés vers l'intérieur, réalisés et agencés pour engager la housse textile.

4. Siège de véhicule selon la revendication 3, dans lequel ladite seconde bride (22) est une plaque frontale décorative.

5. Siège de véhicule selon la revendication 3, dans lequel ledit ensemble à poignée de commande (12) et ledit moyen (14) pour commander la position du siège de véhicule sont reliés entre eux par un câble.

6. Siège de véhicule selon la revendication 3, dans lequel ledit ensemble à poignée de commande (12) et ledit moyen (14) pour commander la position du siège de véhicule sont reliés entre eux électriquement.

7. Siège de véhicule selon la revendication 3, dans lequel ladite seconde bride (22) est positionnée au-dessus de ladite première bride (18) par engagement avec ledit ensemble à poignée de commande (12).

8. Procédé pour réaliser un siège de véhicule comprenant un châssis de siège, un rembourrage et une housse textile, dans lequel la position du siège du véhicule est réglée par une poignée (14) de commande de position, ledit procédé comprenant les étapes qui consistent à :
- positionner la poignée de commande de position (14) par rapport au châssis du siège ;
- installer le rembourrage sur le châssis du siège ;
- installer la housse textile sur le rembourrage ; et
- emprisonner la housse textile entre une première bride (18) et une seconde bride (22), ladite première bride (18) étant réalisée et agencée de façon à entourer la poignée de commande de position (14) et ladite seconde bride (22) étant réalisée et agencée de façon à être montée au-dessus de ladite première bride (18),
**caractérisé en ce que**
- ladite première bride (18) comporte de multiples ergots (20) tournés vers l'extérieur, réalisés et agencés pour engager la housse textile ; et
- ladite seconde bride (22) comporte de multiples ergots (26) tournés vers l'intérieur, réalisés et agencés pour engager la housse textile.

9. Procédé selon la revendication 8, comprenant en outre l'étape consistant à relier ladite poignée de commande de position (14) à un mécanisme de déplacement du siège.

10. Procédé selon la revendication 8, dans lequel ladite seconde bride (22) est une plaque frontale décorative.
